# EUROPÄISCHE PATENTSCHRIFT

(11) **EP 0 560 291 B1**
(45) Veröffentlichungstag und Bekanntmachung des Hinweises auf die Patenterteilung: **02.08.1995**
(21) Anmeldenummer: 93103772.5
(22) Anmeldetag: 09.03.1993
(51) Int. Cl.: C09K 15/34, A23L 3/3472

(54) **Verfahren zur Herstellung von natürlichen Antioxidantien**
Process for preparing natural antioxidants
Procédé de préparation d'antioxydants naturels

(30) Priorität: 11.03.1992 DE 4207739
(43) Veröffentlichungstag der Anmeldung: 15.09.1993
(73) Patentinhaber: SKW Trostberg Aktiengesellschaft, 83308 Trostberg (DE)
(72) Erfinder: Kahleyss, Ralf, Dr., W-8223 Trostberg (DE); Michlbauer, Franz, W-8261 Kirchweidach (DE)
(74) Vertreter: Huber, Bernhard, Dipl.-Chem.

(56) Entgegenhaltungen:
- EP-A- 0 454 097
- DATABASE WPIL, Week 9214, Derwent Publications Ltd., London, GB; AN 92-110776; & JP-A-4 053 895
- DATABASE WPIL, Week 0109, Derwent Publications Ltd., London, GB; AN 91-061468; & JP-A-3 009 984
- PATENT ABSTRACTS OF JAPAN, vol. 016, no. 128, 2. April 1992; & JP-A-32 93 001

## Beschreibung

Gegenstand der Anmeldung ist ein Verfahren zur Herstellung von natürlichen pflanzlichen Antioxidantien, die sich insbesondere durch ihre Geschmacks-, Geruchs- und Farbneutralität auszeichnen.

Der Bedarf an natürlichen Antioxidantien zur Stabilisierung von tierischen bzw. pflanzlichen Fetten und Ölen hat in der Lebensmittel- und Kosmetikindustrie in jüngster Zeit sehr stark zugenommen, nachdem die synthetischen Antioxidantien wie z.B. BHA (Butylhydroxyanisol), BHT (Butylhydroxytoluol) sowie TBHQ (Tertiärbutylhydrochinon) als toxikologisch nicht unbedenklich angesehen werden. Die natürlichen Antioxidantien werden üblicherweise aus pflanzlichen Ausgangsstoffen gewonnen, wobei die Extrakte von Gewürzen und Kräutern, insbesondere Rosmarin, Thymian, Salbei und Oregano, eine besonders hohe antioxidative Wirkung zeigten.

Ein wesentliches Problem bei der Gewinnung dieser natürlichen pflanzlichen Antioxidantien stellt die Aufarbeitung zu einem geschmacks-, geruchs- und farbneutralen Extrakt dar, da die üblicherweise bestehende Anwesenheit von geschmacks- und geruchsintensiven etherischen Ölen für die meisten Anwendungsbereiche unerwünscht ist. Die herkömmlichen Methoden zur Gewinnung von natürlichen Antioxidantien aus pflanzlichen Materialien sind neben der Wasserdampf- oder Molekulardestillation hauptsächlich die Lösemittelextraktion, wobei insbesondere polare Extraktionsmittel wie z.B. Methanol (vgl. US-PS 3 950 266), aber auch unpolare Extraktionsmittel wie z.B. Hexan oder Pentan, empfohlen werden.

Nachteilig bei diesen bekannten Verfahren ist der erforderliche relativ große technische Aufwand sowie die Tatsache, daß die herkömmlichen Lösemittel nur eine geringe Selektivität im Hinblick auf die antioxidativ besonders wirksamen Pflanzeninhaltsstoffe aufweisen. Die auf diese Weise gewonnen Extrakte weisen daher keine so stark antioxidative Wirkung wie die synthetischen Verbindungen auf und sind darüber hinaus auch nicht ausreichend geschmacks- bzw. geruchsneutral.

Aus der US-PS 5 017 397 ist ein Verfahren bekannt, bei dem die antioxidativen Wirkstoffe von Gewürzen mit Hilfe von überkritischem CO₂ gewonnen werden. Hierzu wird bei 350 bis 1000 bar, vorzugsweise 500 bis 1000 bar, und einer Temperatur von 31 bis 120°C ein Gesamtextrakt gewonnen, der anschließend durch fraktionierte Abscheidung wieder in zwei Fraktionen, bestehend aus etherischen Ölen sowie den antioxidativen Stoffen, aufgetrennt wird. Ein Nachteil dieses Verfahrens besteht darin, daß bei vergleichsweise sehr hohen Drucken gearbeitet wird, die in technischen Anlagen nur sehr schwierig zu realisieren sind und daß die exakte Fraktionierung des Extraktes technisch ziemlich schwierig und aufwendig ist.

Schließlich ist es aus der Veröffentlichung von Tateo und Fellin in "Perfumer and Flavorist" 13:48 (1988) bekannt, gemahlenen Rosmarinblättern mit überkritischem CO₂ bei 300 bar und 35°C zunächst den Großteil der etherischen Öle zu entziehen und danach die Oxidationsmittel aus dem Extraktionsrückstand mit Ethanol zu extrahieren. Der auf diese Weise gewonnene Extrakt weist zwar eine gute antioxidative Wirkung auf, ist jedoch für viele Anwendungszwecke noch nicht ausreichend geschmacks- und farbneutral.

Der Erfindung liegt daher die Aufgabe zugrunde, ein Verfahren zur Herstellung von natürlichen pflanzlichen Antioxidantien durch Extraktion von Gewürzen ausgewählt aus der Gruppe Rosmarin, Thymian, Salbei und Oregano mit Hilfe von komprimiertem Kohlendioxid und organischen Lösemitteln zu entwickeln, welches die genannten Nachteile des Standes der Technik nicht aufweist, sondern mit geringem technischen Aufwand die Herstellung von qualitativ hochwertigen Antioxidantien ermöglicht.

Diese Aufgabe wird erfindungsgemäß dadurch gelöst, daß man
a) die Gewürze durch Extraktion mit Kohlendioxid bei einem Druck von 80 bis 300 bar und einer Temperatur von 10 bis 80°C entaromatisiert,
b) den Extraktionsrückstand aus Stufe a) mit polaren alkoholischen Lösemitteln mit 1 bis 4 C-Atomen und/oder unpolaren Kohlenwasserstoffen mit 5 bis 7 C-Atomen extrahiert und
c) den Lösemittelextrakt aus Stufe b) mit Aktivkohle behandelt und
d) den Extrakt aus Stufe c) nach weitgehender Entfernung des Lösemittels mit Wasser bei einer Temperatur von 40 bis 100°C nachbehandelt.

Es hat sich überraschenderweise gezeigt, daß man erfindungsgemäß einen Extrakt gewinnt, der weitgehend geschmacks-, geruchs- sowie farbneutral ist und eine im Vergleich mit synthetischen Antioxidantien überlegene Wirkung aufweist.

Beim Verfahren der Erfindung werden die Gewürze Rosmarin, Thymian, Salbei oder Oregano nach den üblichen Methoden, wie z.B. Mahlen, zerkleinert und in einer ersten Stufe einer CO₂-Extraktion mit komprimiertem Kohlendioxid unterworfen, wobei die Extraktionsparameter in weiten Grenzen variiert werden können. Der Extraktionsdruck kann 80 bis 300 bar, vorzugsweise 150 bis 280 bar, und die Extraktionstemperatur 10 bis 80°C, vorzugsweise 35 bis 65°C, betragen. Die CO₂-Gasmengen richten sich nach Art und Menge des eingesetzten Gewürzes und betragen in der Regel 10 bis 100 kg, vorzugsweise 20 bis 60 kg pro kg des jeweiligen Ausgangsstoffes. Durch Variation der Extraktionsparameter hat man es in der Hand, Konsistenz und Qualität der in Stufe a) gewonnenen Aromafraktion zu beeinflussen. Wählt man den Extraktionsdruck relativ hoch im angegebenen Bereich, so wird der Extrakt zähflüssiger und weist noch eine deutliche antioxidative Wirkung auf, während bei einem niedrigeren Extraktionsdruck die Aromafraktion wesentlich dünnflüssiger ist und nur noch eine geringe bzw. keine antioxidative Wirkung mehr besitzt. Will man die Aromafraktion weiterverwenden, was ohne weiteres möglich ist, so empfiehlt es sich jedoch, wegen der Temperaturbelastung der etherischen Öle die Extraktionstemperatur relativ niedrig einzustellen. Die Abscheidung der Aromastoffe des betreffenden Gewürzes aus dem CO₂ kann nach den üblichen Methoden, vorzugsweise durch Druckentspannung des komprimierten Kohlendioxids, vorgenommen werden.

In der Stufe b) des erfindungsgemäßen Verfahrens wird der Extraktionsrückstand aus der Stufe a), der weitgehend geruchlos ist, einer weiteren Extraktion unterworfen, wobei entweder polare Alkohole mit einem C₁ bis C₄-Rest und/oder unpolare Kohlenwasserstoffe mit einem C₅ bis C₇-Rest verwendet werden. Die alkoholischen Lösemittel weisen vorzugsweise aliphatische Kohlenwasserstoffreste auf und können linear oder verzweigt sein. Bevorzugt werden Methanol, Ethanol, Propanol, iso-Propanol, iso-Butanol sowie tert.-Butanol. Besonders bevorzugt ist Methanol. Bei den unpolaren Kohlenwasserstoffen mit C₅ bis C₇-Resten werden ebenfalls die aliphatischen bevorzugt. Hexan wird besonders bevorzugt, doch können auch Pentan oder Heptan vorteilhaft eingesetzt werden.

Diese Lösemittelextraktion wird vorzugsweise mit einem 5- bis 10-fachen Überschuß an Lösemittel und bei einer Temperatur zwischen 20 und 100°C durchgeführt. Man gewinnt dabei einen Großteil der für die antioxidative Wirkung verantwortlichen Wirksubstanzen, im wesentlichen phenolische tricyclische Diterpene. Diese Lösemittelextraktion kann nach bekannten Methoden und mit üblichen Vorrichtungen durchgeführt werden.

Im Anschluß daran wird die nach Stufe b) gewonnene Extraktionslösung noch einer Behandlung mit Aktivkohle unterworfen. Dadurch werden die Farbstoffe, die im wesentlichen aus Chlorophyllen bestehen, aus dem Extrakt entfernt. Die Menge der dabei eingesetzten Aktivkohle richtet sich nach dem Farbstoffgehalt des Extraktes und beträgt in der Regel 3 bis 10 Gew.-%, bezogen auf das Gewicht der Extraktionslösung aus Stufe b). Es ist grundsätzlich möglich, auch größere Mengen an Aktivkohle zu verwenden, doch werden diese wegen des geringen technischen Effekts sehr schnell unwirtschaftlich.

Die Temperatur für die Aktivkohle-Behandlung ist ebenfalls relativ unkritisch. Doch hat es sich aus energetischen Gründen als besonders vorteilhaft erwiesen, diesen Behandlungsschritt bei derselben Temperatur durchzuführen wie die Lösemittelextraktion. Auf diese Weise wird ein energetisch aufwendiges Erwärmen oder Abkühlen der Extraktionslösung vermieden. Die Aufarbeitung bzw. Aufkonzentrierung des Lösemittelextraktes ist unproblematisch. Es kann auf die bekannten Methoden und Vorrichtungen zurückgegriffen werden.

Falls erforderlich, kann sich an die Aufkonzentrierung des Extraktes noch eine Wasserbehandlung bei einer Temperatur von 40 bis 100°C, vorzugsweise 50 bis 70°C, anschließen, wobei man vorzugsweise die 5- bis 10-fache Menge an Wasser, bezogen auf das Gewicht des Extraktes nach Stufe c), einsetzt. Dieser Nachbehandlungsschritt dient zur Entfernung von restlichen Mengen an Farb- und Aromastoffen aber auch der Lösemittelreste. Dies ist deshalb von besonderem Vorteil, weil man praktisch lösemittelfreie Extrakte herstellen kann, ohne bei der Aufkonzentrierung auf einen Lösemittelanteil < 5 % gehen zu müssen, was technisch sehr aufwendig und temperaturbelastend für die Antioxidans-Fraktion ist.

Aufgrund des vergleichsweise geringen technischen Aufwands (selbst die Hochdruckextraktion wird bei einem relativ niedrigen Extraktionsdruck durchgeführt) und des qualitativ hochwertigen Extraktes, der ausgezeichnete antioxidative Wirkungen besitzt und außerdem weitgehend geschmacks-, geruchs- und farbneutral ist, ist das erfindungsgemäße Verfahren besonders gut für den technischen Maßstab geeignet.

Die nachfolgenden Beispiele sollen die Erfindung näher erläutern.

### BEISPIELE

### Beispiel 1

100 kg gemahlener Rosmarin werden bei 280 bar und 35°C mit insgesamt 4000 kg CO₂ innerhalb von 4 Stunden extrahiert. Der Extrakt wird durch Druckabsenkung bei 40 bar und 8°C abgeschieden, wobei man ca. 7,8 kg grünen pastösen Extrakt erhält. Der Extraktionsrückstand, der praktisch aromafrei ist, wird anschließend zweimal mit je 400 kg Methanol je 2 Stunden bei 60°C extrahiert. Die Feststoffanteile werden dann durch Filtration abgetrennt. Es fallen auf diese Weise etwa 700 kg einer dunkelgrünen, klaren Extraktlösung an.

Diese Extraktlösung wird anschließend mit zweimal 21 kg Aktivkohle jeweils 30 Minuten bei 60°C gerührt und anschließend die Aktivkohle durch Filtration abgetrennt. Das Lösemittel wird weitgehend abdestilliert bis der Restgehalt an Methanol < 5 Gew.-% beträgt. Es werden etwa 10 kg einer Antioxidans-Fraktion gewonnen, die mit der 10-fachen Menge Wasser bei 60°C gewaschen wird, um Bitterstoffe und Restmengen an Lösemittel zu entfernen.

Nach der Trocknung auf einen Wassergehalt < 10 Gew.-% erhält man 7 kg eines hellgelben, praktisch geruchs- und geschmacksneutralen Antioxidans-Konzentrats.

### Beispiel 2

100 kg gemahlener Rosmarin werden bei 180 bar und 50°C mit insgesamt 4200 kg CO₂ innerhalb von 4 Stunden extrahiert. Der Extrakt wird durch Druckabsenkung bei 50 bar und 20°C abgeschieden, wobei man 3,5 kg eines grünen, schwach pastösen Extraktes erhält. Der praktisch aromafreie Extraktionsrückstand wird zweimal mit 530 kg Methanol je 2 Stunden bei 60°C extrahiert und der Feststoff durch Filtration von der Extraktlösung abgetrennt.

Man erhält auf diese Weise 950 kg einer dunkelgrünen, klaren Extraktlösung, die anschließend mit 57 kg Aktivkohle 1 Stunde lang bei 60°C gerührt wird. Nach der Abtrennung der Aktivkohle durch Filtration wird das Lösemittel abdestilliert, bis der Restgehalt an Methanol maximal 5 Gew.-% beträgt. Man gewinnt auf diese Weise etwa 10 kg einer Antioxidans-Fraktion, die mit der 7-fachen Menge Wasser bei 50°C gewaschen wird, um die Restmengen an Aromastoffen und Lösemitteln zu entfernen.

Nach der Trocknung auf < 10 Gew.-% erhält man ca. 7 kg eines gelb gefärbten, geschmacks- und geruchsneutralen Antioxidans-Konzentrats.

### Beispiel 3

### Untersuchung der Wirksamkeit der Antioxidantien

In einem vergleichenden Lagertest wurden Proben hergestellt aus Schweineschmalz, welches jeweils mit einem erfindungsgemäß erhaltenen Präparat, sowie zum Vergleich mit BHA, BHT, Octylgallat oder α-Tocopherol stabilisiert wurde. Als weiterer Vergleich wurde unstabilisiertes Schweineschmalz verwendet. Alle Proben wurden bei 60°C unter freiem Luftsauerstoff-Zutritt gelagert (Schaal-Test). Die Konzentration wurde auf 200 ppm des entsprechenden Antioxidans eingestellt. Periodisch wurde alle 2 bis 3 Tage eine Probe des Fettes auf den Peroxidgehalt untersucht (Verfahren nach Wheeler) und sensorisch überprüft.

| POZ (200 mg/kg) | Tage | | | | |
|---|---|---|---|---|---|
| | 7 | 11 | 23 | 30 | 41 |
| Kontrolle (unstab. Schweineschmalz) | 33,0 | 140,0 | 367,0 | 375,0 | 387,0 |
| BHA | 6,0 | 7,9 | 17,0 | 22,0 | 54,0 |
| BHT | 3,3 | 3,3 | 6,5 | 8,0 | 21,0 |
| Octylgallat | 2,6 | 2,8 | 4,7 | 5,4 | 17,0 |
| α-Tocopherol | 14,0 | 24,0 | 361,0 | 384,0 | 387,0 |
| Erfindung (Beispiel 1) | 2,0 | 2,4 | 4,6 | 6,4 | 9,6 |

Aus der Tabelle ist ersichtlich, daß das erfindungsgemäße Präparat die Haltbarkeit von Schweineschmalz bei den angewendeten Bedingungen um mindestens das 6-fache verlängert, wenn ein sensorischer "Grenzwert" von POZ = 10 angenommen wird. Damit besitzt das erfindungsgemäße Präparat eine den synthetischen Präparaten überlegene Wirkung.

## Patentansprüche

1. Verfahren zur Herstellung von natürlichen pflanzlichen Antioxidantien durch Extraktion von Gewürzen ausgewählt aus der Gruppe Rosmarin, Thymian, Salbei und Oregano mit Hilfe von komprimiertem Kohlendioxid und organischen Lösemitteln,
**dadurch gekennzeichnet,**
daß man
a) diese Gewürze durch Extraktion mit Kohlendioxid bei einem Druck von 80 bis 300 bar und einer Temperatur von 10 bis 80°C entaromatisiert,
b) den Extraktionsrückstand aus Stufe a) mit polaren alkoholischen Lösemitteln mit 1 bis 4 C-Atomen und/oder unpolaren Kohlenwasserstoffen mit 5 bis 7 C-Atomen extrahiert und
c) den Lösemittelextrakt aus Stufe b) einer Behandlung mit Aktivkohle unterwirft und
d) den Extrakt aus Stufe c) nach weitgehender Entfernung des Lösemittels mit Wasser bei einer Temperatur von 40 bis 100°C nachbehandelt.

2. Verfahren nach Anspruch 1,
**dadurch gekennzeichnet,**
daß man die CO₂-Extraktion bei einem Druck zwischen 150 und 280 bar und einer Temperatur zwischen 35 und 65°C durchführt.

3. Verfahren nach den Ansprüchen 1 oder 2,
**dadurch gekennzeichnet,**
daß die CO₂-Gasmengen 10 bis 100 kg, vorzugsweise 20 bis 60 kg pro kg des eingesetzten Gewürzes betragen.

4. Verfahren nach einem der Ansprüche 1 bis 3,
**dadurch gekennzeichnet,**
daß man als polares alkoholisches Lösemittel Methanol einsetzt.

5. Verfahren nach einem der Ansprüche 1 bis 3,
**dadurch gekennzeichnet,**
daß man als unpolaren Kohlenwasserstoff Hexan verwendet.

6. Verfahren nach einem der Ansprüche 1 bis 5,
**dadurch gekennzeichnet,**
daß man das Lösemittel in Stufe b) in einer 5- bis 10-fachen Menge, bezogen auf den Extraktionsrückstand aus Stufe a), einsetzt.

7. Verfahren nach einem der Ansprüche 1 bis 6,
**dadurch gekennzeichnet,**
daß die Temperatur in Stufe b) zwischen 20 und 100°C liegt.

8. Verfahren nach einem der Ansprüche 1 bis 7,
**dadurch gekennzeichnet,**
daß man die Aktivkohle in einer Menge von 3 bis 10 Gew.-%, bezogen auf das Gewicht der Extraktionslösung aus Stufe b), einsetzt.

9. Verfahren nach einem der Ansprüche 1 bis 8,
**dadurch gekennzeichnet,**
daß man die Behandlung mit Aktivkohle bei derselben Temperatur wie die Lösemittel-Extraktion vornimmt.

10. Verfahren nach einem der Ansprüche 1 bis 9,
**dadurch gekennzeichnet,**
daß man die Nachbehandlung mit Wasser bei einer Temperatur von 50 bis 70°C durchführt.

## Claims

1. Process for the production of natural vegetable antioxidants by extraction of spices selected from the group of rosemary, thyme, sage and oregano with the aid of compressed carbon dioxide and organic solvents,
**wherein**
a) these spices are de-aromatized by extraction with carbon dioxide at a pressure of 80 to 300 bar and at a temperature of 10 to 80°C,
b) the extraction residue from step a) is extracted with polar alcoholic solvents having 1 to 4 C atoms and/or non-polar hydrocarbons with 5 to 7 C atoms and
c) the solvent extract from step b) is subjected to treatment with active carbon and,
d) the extract from step c) is aftertreated with water at a temperature of 40 to 100°C after extensively removing the solvent.

2. Process as claimed in claim 1,
**wherein**
the CO₂ extraction is carried out at a pressure between 150 and 280 bar and at a temperature between 35 and 65°C.

3. Process as claimed in claims 1 or 2,
**wherein**
the amounts of CO₂ gas are 10 to 100 kg, preferably 20 to 60 kg per kg of the spice used.

4. Process as claimed in one of the claims 1 to 3,
**wherein**
methanol is used as the polar alcoholic solvent.

5. Process as claimed in one of the claims 1 to 3,
**wherein**
hexane is used as the non-polar hydrocarbon.

6. Process as claimed in one of the claims 1 to 5,
**wherein**
the solvent in step b) is used in a 5 to 10-fold amount in relation to the extraction residue from step a).

7. Process as claimed in one of the claims 1 to 6,
**wherein**
the temperature in step b) is between 20 and 100°C.

8. Process as claimed in one of the claims 1 to 7,
**wherein**
the active carbon is used in an amount of 3 to 10 % by weight in relation to the weight of the extraction solution from step b).

9. Process as claimed in one of the claims 1 to 8,
**wherein**
the treatment with active carbon is carried out at the same temperature as the solvent extraction.

10. Process as claimed in one of the claims 1 to 9,
**wherein**
the aftertreatment with water is carried out at a temperature of 50 to 70°C.

## Revendications

1. Procédé de préparation d'antioxydants végétaux naturels par extraction d'épices choisies dans le groupe constitué par le romarin, le thym, la sauge et l'origan, à l'aide de dioxyde de carbone comprimé et de solvants organiques, caractérisé en ce que
a) on désaromatise ces épices par extraction avec du dioxyde de carbone sous une pression de 80 à 300 bars et à une température de 10 à 80°C,
b) on extrait le résidu de l'extraction de l'étape a) avec des solvants alcooliques polaires de 1 à 4 atomes de carbone et/ou des hydrocarbures non polaires de 5 à 7 atomes de carbone, et
c) on soumet l'extrait avec les solvants de l'étape b) à un traitement avec du charbon actif, et
d) on traite ensuite l'extrait de l'étape c), après avoir largement éliminé le solvant, avec de l'eau à une température de 40 à 100°C.

2. Procédé selon la revendication 1, caractérisé en ce que l'on effectue l'extraction au CO₂ sous une pression comprise entre 150 et 280 bars et à une température comprise entre 35 et 65°C.

3. Procédé selon les revendications 1 et 2, caractérisé en ce que la quantité de CO₂ gazeux est comprise entre 10 et 100 kg, de préférence entre 20 et 60 kg par kg d'épice utilisée.

4. Procédé selon l'une des revendications 1 à 3, caractérisé en ce que l'on utilise du méthanol comme solvant alcoolique polaire.

5. Procédé selon l'une des revendications 1 à 3, caractérisé en ce que l'on utilise de l'hexane comme hydrocarbure non polaire.

6. Procédé selon l'une des revendications 1 à 5, caractérisé en ce que, dans l'étape b), on utilise le solvant en une quantité représentant 5 à 10 fois la quantité de résidu de l'extraction de l'étape a).

7. Procédé selon l'une des revendications 1 à 6, caractérisé en ce que la température dans l'étape b) est comprise entre 20 et 100°C.

8. Procédé selon l'une des revendications 1 à 7, caractérisé en ce que l'on utilise le charbon actif en une quantité de 3 à 10 % en masse par rapport à la masse de la solution d'extraction de l'étape b).

9. Procédé selon l'une des revendications 1 à 8, caractérisé en ce que l'on effectue le traitement avec le charbon actif à la même température que l'extraction au solvant.

10. Procédé selon l'une des revendications 1 à 9, caractérisé en ce que l'on effectue le traitement ultérieur à l'eau à une température de 50 à 70°C.
